# EUROPEAN PATENT SPECIFICATION

(11) **EP 2 798 168 B1**
(45) Date of publication and mention of the grant of the patent: **17.02.2021**
(21) Application number: 12861669.5
(22) Date of filing: 20.12.2012
(51) Int. Cl.: F01N 3/20, F01N 9/00

(54) **METHOD AND SYSTEM FOR REDUCTION OF DEPOSITS IN AN AFTERTREATMENT SYSTEM**
VERFAHREN UND SYSTEM ZUR REDUZIERUNG VON ABLAGERUNGEN IN EINEM NACHBEHANDLUNGSSYSTEM
PROCÉDÉ ET SYSTÈME POUR RÉDUIRE DES DÉPÔTS DANS UN SYSTÈME DE POST-TRAITEMENT

(30) Priority: 28.12.2011 SE 1151283
(43) Date of publication of application: 05.11.2014
(73) Proprietor: Scania CV AB, 151 87 Södertälje (SE)
(72) Inventor: KARLSSON, Carl-Johan, S-452 37 Strömstad (SE); TELBORN, Klas, S-152 71 Södertälje (SE)
(74) Representative: Scania CV AB
(86) International application number: PCT/SE2012/051448
(87) International publication number: WO 2013/100846

(56) References cited:
- WO-A1-2011/087445
- DE-A1- 10 043 798
- FR-A1- 2 978 205
- FR-A1- 2 979 381
- GB-A- 2 448 993
- GB-A- 2 448 993
- US-A1- 2011 030 343
- US-A1- 2012 006 010
- US-A1- 2012 090 296
- US-A1- 2013 031 891

## Description

### Field of the invention

The present invention relates to a method pertaining to treatment of an exhaust flow arising from a combustion process by using a post-treatment system. The invention relates also to a system and a vehicle and to a computer program and a computer program product.

### Background to the invention

Growing official concern about pollution and air quality, particularly in urban areas, has led to the adoption of emission standards and rules in many jurisdictions.

Such emission standards often take the form of sets of requirements which define acceptable limits for exhaust emissions from vehicles equipped with combustion engines. For example, these standards often regulate levels for emission of nitrogen oxides (NOₓ), hydrocarbons (HC), carbon monoxide (CO) and particles from most types of vehicles.

In an endeavour to comply with such emission standards, exhaust gases caused by combustion in combustion engines are post-treated (cleaned).

A commonly applied way to post-treat exhaust gases from a combustion engine is a so-called catalytic cleaning process, so vehicles equipped with a combustion engine are usually also provided with at least one catalyst. There are various types of catalysts, since different types may be required for different fuels and/or to clean different types of pollutants in the exhaust flow, and with regard at least to nitrous gases (nitrogen monoxide, nitrogen dioxide), hereinafter called nitrogen oxides NOₓ heavy vehicles are often provided with a catalyst where an additive is supplied to the exhaust flow arising from the engine's combustion in order to reduce nitrogen oxides NOₓ mainly to nitrogen gas and water vapour.

A type of catalyst commonly used in this kind of reduction, particularly in heavy vehicles, is SCR (selective catalytic reduction) catalysts. SCR catalysts usually use ammonia (NH₃), or a compound from which ammonia may be generated/formed, as additive for reduction of the amount of nitrogen oxides (NOₓ). The additive is injected, upstream of the catalyst, into the exhaust flow arising from the engine. The additive supplied to the catalyst is adsorbed (stored up) in the catalyst, and nitrogen oxides in the exhaust gases react with the additive stored in the catalyst.

GB2448993 shows a method for removing urea deposits from an SCR catalyst by maintaining the SCR catalyst at a predetermined regeneration temperature for a predetermined time interval.

### Summary of the invention

An object of the present invention is to propose a method for reduction of at least one coating in a post-treatment system. This object is achieved by a method according to the characterising part of claim 1.

The present invention relates to a method for reduction of a first coating in a post-treatment system which is intended to treat an exhaust flow arising from combustion in a combustion engine, said first coating being formed by an additive supplied to said post-treatment system by being supplied to a first catalyst for reduction of at least one first compound in said exhaust flow, said first compound being a nitrogen oxide (NOₓ). The method, at commencement of reduction of said first coating, comprises
- controlling to a relatively high level (NO_{x_HIGH}) a content of said first compound (NOₓ) delivered by said engine (101), said relatively high level (NO_{x_}HIGH) being 1000 ppm or higher, and, during the reduction of said first coating,
- determining a first content of said first compound at a location downstream of said first catalyst, and
- taking a first remedial measure to reduce the content of said first compound when said first content is greater than a second content.

The present invention is thus applicable in post-treatment systems where an additive is supplied to the exhaust flow. As above, SCR systems are an example of such a system. These types of systems have certain disadvantages. One problem with for example SCR systems and injecting their additives, e.g. urea or AdBlue, is that the supply of additive may cause a coating build-up such as a crystal build-up, e.g. of urea, in the post-treatment system, e.g. in pipes/catalysts/silencers at or downstream of the location where the injection takes place. The coating may for example take the form of a urea build-up or a build-up of a combination from/with which urea may form.

These build-ups may grow so large as to affect the engine's performance by the exhaust flow in the exhaust system being affected (throttled), and in the worst case a large coating build-up may completely prevent continued running of the engine. The coating may also damage components of the post-treatment system if for example crystal formations, e.g. in the form of lumps, become detached from the location where they have formed and are then carried by the exhaust flow to, for example, a downstream SCR catalyst.

The build-up of the coating may for example occur when for example a vehicle and hence its combustion engine run in static conditions, e.g. if for example a vehicle is run for a lengthy period in such a way that the resulting exhaust flow temperature is kept relatively low.

By raising the temperature of the exhaust flow while at the same time shutting off the supply of additive it is possible for coatings which have arisen to be reduced by burning and for such problems as crystal build-up to be diminished/eliminated. During the reduction, however, the content of the compound or compounds which the additive is intended to reduce may rise to undesirable/impermissible levels. The present invention prevents this by determining a first content of at least one compound which is normally reduced by using the additive, which content is determined at a location downstream of said first catalyst. Comparing this first content with a second content which may be a predetermined content set at some suitable value as below then makes it possible during continued reduction of said coating for a first remedial measure to be taken when said first content is greater than said second content.

An SCR catalyst usually reduces nitrogen oxides NOₓ comprising mainly nitrogen monoxide and nitrogen dioxide. During the reduction of the crystal build-up, the additive stored in the crystals will react with the passing exhaust flow so that a reduction of said first compound continues to take place to a certain extent. Progressively as the crystals burn, however, the content of said first compound will rise and eventually reach undesirable and, in cases where emissions of said first compound are regulated, perhaps even impermissible levels. The invention prevents this by monitoring the content of said first compound in the exhaust flow discharged and taking a remedial measure to lower the content of the first compound when the emission becomes undesirably large. The remedial measure is taken so that the content of said first compound downstream of said first catalyst is reduced.

The remedial measure may for example take the form of controlling a content of said first compound which is delivered by said engine. The engine may be controlled so that a lower content is delivered. Controlling the content delivered by the engine may be conducted in various ways, e.g. by regulating injection angle/timing and/or fuel/air mixture.

Alternatively, or in combination, an amount of additive may be supplied to lower said first content, the amount supplied being less than that normally required for reducing the content of said first compound when there is no contribution to the reduction from burning of the coating.

Further characteristics of the present invention and advantages thereof are indicated by the detailed description of embodiment examples set out below and the attached drawings.

### Detailed description of embodiments

- Fig. 1A: depicts schematically a vehicle with which the present invention may be employed.
- Fig. 1B: depicts a control unit in the control system for the vehicle depicted in Fig. 1.
- Fig. 2: depicts the post-treatment system in more detail for the vehicle depicted in Fig. 1.
- Fig. 3: depicts an example of a dosing system for supply of additive to the exhaust flow.
- Fig. 4: depicts a method according to an embodiment example of the present invention.
- Fig. 5: depicts an example of a time pattern for released amount/content of reducing agent according to an embodiment of the present invention.
- Fig. 6: depicts an example of a time pattern for the content of nitrogen oxides NOₓ generated by the engine's combustion according to an embodiment of the present invention.

### Detailed description of embodiments

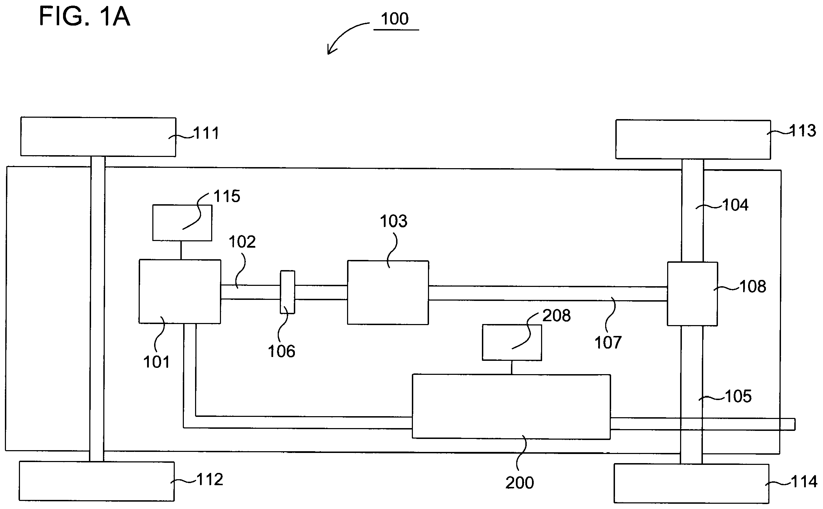

Fig. 1A depicts schematically a power train of a vehicle 100 according to an embodiment of the present invention. The vehicle depicted has only one axle provided with tractive wheels 113, 114 but the invention is also applicable on vehicles in which more than one axle is provided with tractive wheels, and on vehicles with one or more further axles, e.g. one or more tag axles. The power train comprises a combustion engine 101 connected in a conventional way, via an output shaft of the engine, usually via a flywheel 102, to a gearbox 103 via a clutch 106.

The engine is controlled by the vehicle's control system via a control unit 115. The clutch 106, which may for example be automatically operated, and the gearbox 103 are also controlled by the vehicle's control system by means of one or more suitable control units (not depicted). The vehicle's power train may of course also be of some other kind, e.g. a type with conventional automatic gearbox etc.

An output shaft 107 from the gearbox 103 drives the tractive wheels 113, 114 via a final gear 108, e.g. a conventional differential, and driveshafts 104, 105 which are connected to said final gear 108.

The vehicle 100 further comprises a post-treatment (exhaust cleaning) system 200 for treatment (cleaning) of exhaust emissions arising from combustion in the engine's combustion chambers (e.g. cylinders).

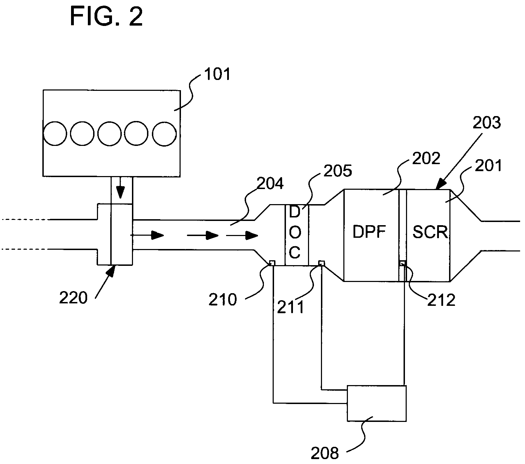

The post-treatment system is depicted in more detail in Fig. 2, showing the vehicle's engine 101 from which the exhaust gases (the exhaust flow) generated by the combustion being led through a turbo unit 220. In turbo engines the exhaust flow arising from the combustion often drives a turbo unit which compresses the incoming air for the combustion in the cylinders. Alternatively, the turbo unit may for example be of compound type. The function of various kinds of turbo unit is well-known and is therefore not described in more detail here. The exhaust flow is then led via a pipe 204 (indicated by arrows) to a diesel particle filter (diesel particulate filter, DPF) 202 via an oxidation catalyst (diesel oxidation catalyst, DOC) 205. Combustion in the engine results in the formation of soot particles, and the particle filter 202 is used to intercept them. The exhaust flow is led through a filter structure whereby soot particles are captured from the passing exhaust flow and are stored in the filter.

The oxidation catalyst DOC 205 has various functions and is normally used primarily, as part of the post-treatment, to oxidise remaining hydrocarbons and carbon monoxide in the exhaust flow to carbon dioxide and water. The oxidation of hydrocarbons (i.e. oxidation of fuel) results also in the formation of heat which may be utilised to raise the temperature of the particle filter during its emptying which is normally required at intervals, its so-called regeneration.

The oxidation catalyst may also oxidise to nitrogen dioxide (NO₂) a large proportion of the nitrogen monoxides (NO) present in the exhaust flow. The oxidation of nitrogen monoxide NO to nitrogen dioxide NO₂ is also advantageous in downstream reduction of nitrogen oxides NOₓ. In this respect, the post-treatment system further comprises an SCR (selective catalytic reduction) catalyst 201 situated downstream of the particle filter 202. SCR catalysts use ammonia (NH₃), or compounds from which ammonia may be generated/formed, e.g. urea, as additive to reduce the amount of nitrogen oxides NOₓ in the exhaust flow. The effectiveness of this reduction does however depend on the ratio between NO and NO₂ in the exhaust flow, so the reducing reaction is affected positively by preceding oxidation of NO to NO₂.

With regard to the present invention, the post-treatment system may generally be of various kinds and for example need not comprise a particle filter 202 or an oxidation catalyst 205 so long as the post-treatment system is of a type which supplies additive to a catalytic exhaust cleaning process, as in the case of said SCR catalyst 201. The post-treatment system may also comprise further undepicted components, e.g. an ASC (ammonia slip catalyst).

The components DOC 205, DPF 202 and the SCR catalyst 201 may also be integrated in a combined exhaust cleaning unit or be separate units.

As mentioned above, the SCR catalyst requires additive to reduce the concentration of a first compound, said first compound being a nitrogen oxide (NOₓ), in the exhaust gases from the engine. This additive is often urea-based, e.g. in the form of AdBlue, which is in principle urea diluted with water. Urea forms ammonia when heated.

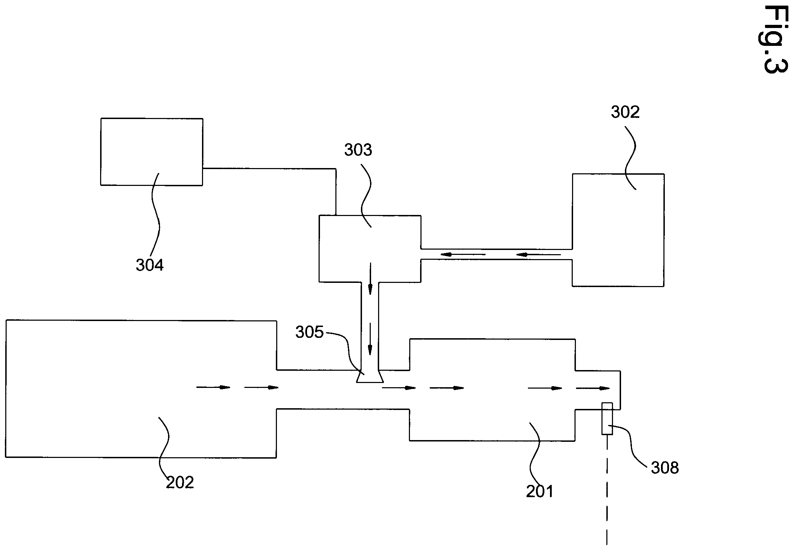

An example of a system for supply of additive is depicted in more detail in Fig. 3 showing from among the above components only the particle filter 202 and the SCR catalyst 201, which system comprises as well as said SCR catalyst a urea tank 302 connected to a urea dosing system (UDS) 303.

The UDS system comprises or is controlled by a UDS control unit 304 which generates control signals to control the supply of additive so that by means of an injection nozzle 305 upstream of the SCR catalyst desired amounts of additive are injected from the urea tank 302 into the exhaust flow arising from the combustion in the cylinders of the engine 101. Fig. 3 also shows an NOₓ sensor 308 situated downstream of the SCR catalyst.

The more specific functions of the UDS system are well described in prior art and the exact method for injection of additive is therefore not described in more detail here. It is however generally the case that the temperature at injection points/SCR catalysts needs to be at least 200-250ºC, preferably over 300ºC, to achieve desired reaction rates and hence desired reduction of said first compound, e.g. one or more types of nitrogen oxides.

As above, however, such systems have certain disadvantages. If for example the temperature at the location in the post-treatment system where the supply of additive takes place is too low, urea injected by means of the injection nozzle 305 may well not be vaporised immediately by the passing exhaust flow but may instead encounter relatively cool pipe walls to which additive becomes attached and begins to build up crystals. So long as the vehicle runs at varying and periodically higher loads with consequent temperature rises in the post-treatment system, this crystal build-up will not grow unacceptably large before the crystals are burnt away by the passing exhaust flow. If conversely the vehicle runs for a time in relatively static conditions at relatively light loads, resulting in low temperatures in the exhaust system, this crystal build-up may proceed until the vehicle's performance is to an unacceptable extent affected adversely by the increased flow resistance. The crystal build-up may also affect the ability of the SCR system to convert NOₓ if the supply of urea (e.g. spray pattern, amount) is disrupted by a coating in lump form.

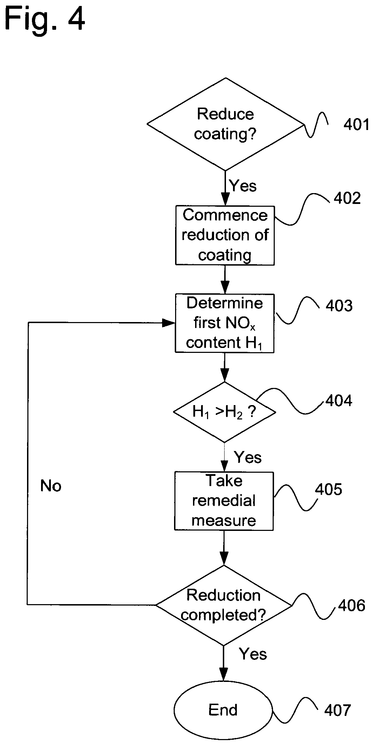

In such situations, remedial measures have therefore to be taken to prevent problems of far-reaching crystal build-up. The crystal build-up is reduced by raising the temperature of the exhaust flow while at the same time halting the supply of additive. During this reduction of crystals, however, increased and unacceptable emissions of said first compound, NOₓ, may occur. The present invention proposes a method for preventing such unacceptable emissions. A method example 400 according to the invention is illustrated in Fig. 4. The invention may be implemented in any suitable control unit, e.g. the control unit 208 depicted in Fig. 2. Control systems in modern vehicles generally consist of a communication bus system comprising one or more communication buses to connect a number of electronic control units (ECUs), e.g. the control units or controllers 115, 208, 304 to various components on board the vehicle. Such a control system may comprise a large number of control units, and taking care of a specific function may be shared by two or more of them. For the sake of simplicity, however, only said control units appear in the drawings.

In the embodiment depicted, the present invention is therefore implemented in control unit 208, which in this embodiment also takes care of other functions in the post-treatment system. It may for example take care of so-called regeneration, i.e. emptying of the particle filter 202. Control unit 208 may also take care of urea injection, i.e. the function which as above is performed by control unit 304.

The invention may also be implemented in a control unit dedicated to the present invention, or wholly or partly in one or more other control units with which the vehicle is already provided, e.g. the engine control unit 115.

The function according to the present invention of control unit 208 (or the control unit or units in which the present invention is implemented) may depend on signals from one or more NOx sensors 210, 308, and also on one or more temperature sensors 211-212 for determination of temperatures in the post-treatment system. The function of the control unit will probably also depend on, for example, information received from, for example, the control unit or units which control engine functions, i.e. in the present example control unit 115.

Control units of the type depicted are normally adapted to receiving sensor signals from various parts of the vehicle. Control unit 208 may for example receive sensor signals as above and also from other control units than the engine control unit 115. Such control units are also usually adapted to delivering control signals to various parts and components of the vehicle, e.g. control unit 208 may for example deliver signals to the engine control unit 115.

Control is often governed by programmed instructions, typically in the form of a computer program which, when executed in a computer or control unit, causes the computer/control unit to effect desired forms of control action, e.g. method steps according to the present invention.

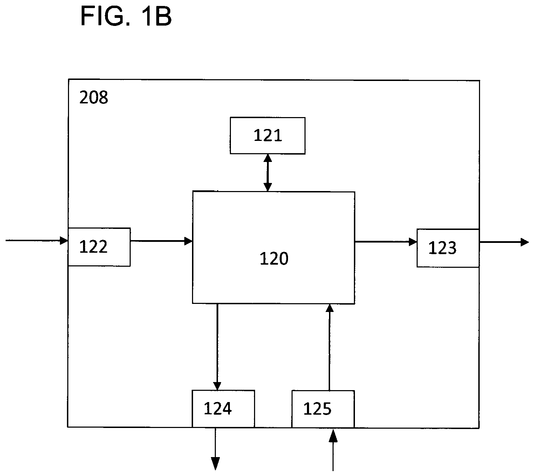

The computer program usually forms part of a computer program product which comprises a digital storage medium 121 (see Fig. 1B) which has the computer program 109 stored on it and may for example take the form of any from among ROM (read-only memory), PROM (programmable read-only memory), EPROM (erasable PROM), flash memory, EEPROM (electrically erasable PROM), a hard disc unit etc., and be situated in or in communication with the control unit, in which case the computer program is executed by the control unit. The vehicle's behaviour in a specific situation may thus be modified by altering the computer program's instructions.

A control unit example (control unit 208) depicted schematically in Fig. 1B may comprise a calculation unit 120 which may for example take the form of any suitable kind of processor or microcomputer, e.g. a circuit for digital signal processing (Digital Signal Processor, DSP), or a circuit with a predetermined specific function (Application Specific Integrated Circuit, ASIC). The calculation unit is connected to a memory unit 121 which provides it with, for example, the stored program code 109 and/or the stored data which the calculation unit needs for it to be able to perform calculations. The calculation unit is also arranged to store partial or final results of calculations in the memory unit 121.

The control unit is further provided with respective devices 122, 123, 124, 125 for receiving and sending input and output signals. These signals may comprise waveforms, pulses or other attributes which the input signal receiving devices 122, 125 can detect as information for processing by the calculation unit 120. The output signal sending devices 123, 124 are arranged to convert calculation results from the calculation unit 120 to output signals for conveying to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, a MOST (Media Oriented Systems Transport) bus or some other bus configuration, or a wireless connection.

Referring again to Fig. 4, the method example 400 illustrated begins at step 401 by determining whether a reduction of coating, in this example a reduction of said crystal build-up, should commence. This determination is not of itself subject matter of the present invention and may be conducted in any suitable way. It is for example possible to make an estimate of the crystal build-up. Determining or estimating for example a temperature at the point/region where the additive is injected, or some other suitable location, makes it possible to use this temperature as a basis for estimating an expected crystal build-up which may for example be determined by table consultation or appropriate calculation.

Calculation of said expected value may for example be by means of a suitable calculation model, and different calculation models may for example be used to represent different operating conditions in order to achieve as good a representation as possible. As well as temperature, the calculation model may for example take account of the volume of the exhaust flow, the amount/mass flow of additive supplied etc. The model may for example be set up on the basis of practical tests or be arrived at in some other way. The temperature at for example the location where the additive supplied encounters surrounding pipes or the like may be determined by means of any available temperature sensors or by means of a temperature model based for example on the temperature sensors normally provided in the post-treatment system, preferably in conjunction with prevailing exhaust mass flow. The calculation model may be refined by for example also taking account of further circumstances, e.g. outside temperature and vehicle speed.

One embodiment determines alternatively or additionally whether a predetermined operating state of said vehicle is fulfilled which relates to a state in which there is increased risk of coating build-up in the exhaust system, and if said state is fulfilled then at least one remedial measure is taken to counter the coating build-up. Said operating state may for example be based on parameters as above, or it is for example possible to determine whether the vehicle has been running "statically" for a certain time. Such determination of the need for reduction of such coatings is described in international patent application WO2011/087445.

If it is determined at step 401 that the amount of additive which has crystallised and has formed a coating, e.g. a certain weight, exceeds some suitable amount/weight, e.g. a certain number of grams, the method moves on to step 402 to commence reduction/burning of the coating.

Where coating reduction is to take place at step 402, the temperature in the post-treatment system is raised. At the same time, the supply of additive is halted. Alternatively, the supply of additive is not halted until the temperature in the post-treatment system reaches a first temperature which is set at any suitable level, such as a suitable temperature within the range 250-400ºC, e.g. within the range 300-350ºC. The crystal reduction is accelerated by the method according to the invention by the engine being set to deliver relatively high contents of nitrogen oxides (NO_{x_HIGH}) in order to speed up reactions between the crystal build-up and passing nitrogen oxides. According to the invention, at step 402, the engine is set to deliver a relatively high NOₓ level (NO_{x_HIGH}) , e.g. 1000-2000 ppm or a suitable content/level over 2000 ppm (it is generally the case that the ratio between emissions of nitrogen oxides NOₓ from a combustion engine is such that increased NOₓ most often results in better efficiency, which can be influenced in desirable ways, e.g. by variation of injection angle/timing and fuel/air mixture).

The method then moves on to step 403.

The temperature rise as above may for example be achieved by supplying the exhaust flow with unburnt fuel which then at least partly oxidises, with consequent release of heat. This oxidation may for example take place in the oxidation catalyst 205 or the particle filter 202 or in some other suitable way. Before unburnt fuel is supplied to the exhaust flow, it is possible to verify for example that the oxidation catalyst temperature is above a minimum level so that oxidation certainly takes place. If such is not the case, the engine may first be directed to an operating mode of low efficiency and consequently deliver higher exhaust temperatures with the object of raising the temperature in the post-treatment system to a level which causes oxidation of fuel supplied.

The amount of fuel supplied may for example depend on such parameters as the temperature of the oxidation catalyst, current volume of exhaust flow, engine load, current vehicle speed etc. and/or be controlled so that desired temperatures are reached in the post-treatment system.

The supply of unburnt fuel to the exhaust flow may be effected in various different ways. The post-treatment system may for example be provided with an injector in the exhaust system upstream of the oxidation catalyst, in which case fuel may injected into the exhaust flow by means of the injector. Alternatively, fuel may be supplied to the exhaust flow by injection into the engine's combustion chambers at a late stage in the combustion cycle so that none or only some of the fuel intended for the regeneration burns in the cylinders, in which case unburnt fuel will accompany the exhaust flow to the post-treatment system.

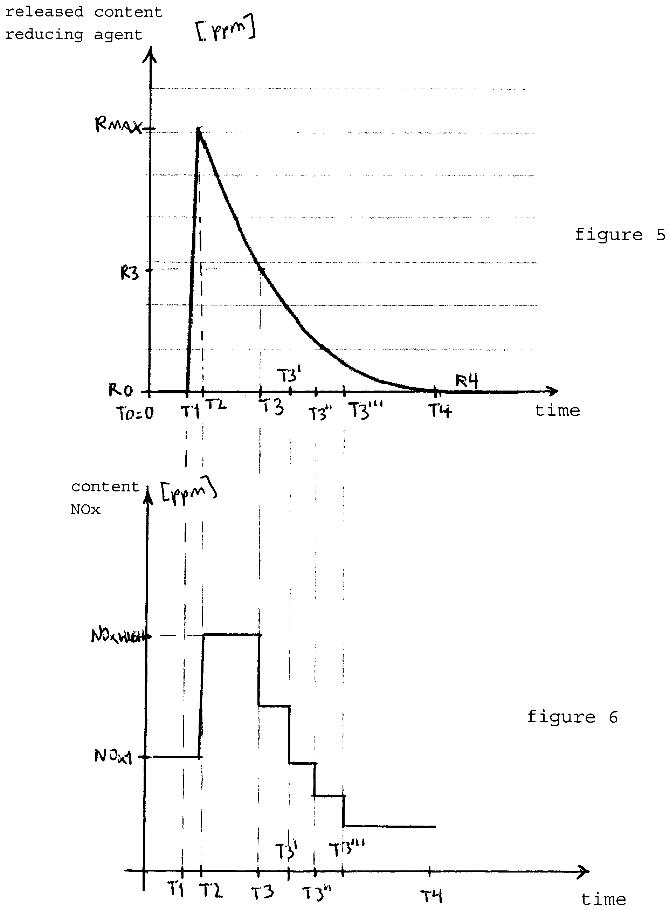

Raising the temperature in the post-treatment system and hence in the region or regions where crystal build-up has occurred will result in the crystals being burnt by the passing exhaust flow and the build-up thereby decreasing. During the burning of the crystals, ammonia/urea will be released and nitrogen oxides NOₓ will therefore continue to be reduced as above even if the supply of further additive is shut off. Progressively as this reduction proceeds and the coating of crystals becomes ever smaller, however, an ever smaller proportion of the nitrogen oxides NOₓ will be reduced, which means that their content in the exhaust flow leaving the vehicle will rise to ever higher levels. How the amount/content of reducing agent released by the crystal varies over time is illustrated in Fig. 5. The temperature rise in the post-treatment system begins at time T0, at which stage the amount/content of reducing agent released by burning R0 is substantially zero. At time T1 the temperature in the post-treatment system has risen to such a high level that the amount/content of reducing agent released during the burning begins to increase relatively quickly. At time T2 the amount/content of reducing agent released during the burning has reached a maximum value RMAX. After time T2 the amount/content of reducing agent released during the burning drops until time T4, at which stage the amount/content of reducing agent released during the burning R4 is substantially zero.

Step 403 determines a first content of a first compound, in this case an NOₓ content H₁ downstream of the SCR catalyst 201, by means of the NOₓ sensor 308. This NOₓ content is then compared at step 404 with a predetermined second NOₓ content H₂ which is set at any suitable value. It is for example possible for said second NOₓ content H₂ to be set at any suitable value within the range 200-500 ppm. So long as the NOₓ content H₁ determined at step 403 is below said second NOₓ content H₂, the method stays at step 404. When conversely the NOₓ content H₁ determined is greater than said second NOₓ content H₂, which with reference to Fig. 5 may for example occur at time T3, the method moves on to step 405 to take at least one remedial measure in order to lower said first NOₓ content H₁ to a below said second content H₂.

Figure 6 illustrates in one embodiment of the invention how the engine's combustion is controlled in such a way that the proportion of nitrogen oxides NOₓ generated during the combustion results in an improved method. Times T0-T4 in Figure 6 correspond to times T0-T4 in Figure 5. Until time T1 in Figure 6 the engine's combustion is controlled in such a way that the proportion of nitrogen oxides generated during the combustion is any suitable content NOₓ1. From time T2 the engine's combustion is controlled in such a way that the proportion of nitrogen oxides generated during the combustion is a relatively high content NOₓHIGH. The crystal reduction is here accelerated by the method according to the invention by the engine being set to deliver relatively high nitrogen oxide contents NOₓHIGH and thereby speed up reactions between the crystal build-up and passing nitrogen oxides.

In one embodiment the engine's combustion is controlled in such a way that the proportion of nitrogen oxides generated during the combustion increases stepwise or gradually/continuously from time T1 to reach at time T2 the relatively high content NOₓHIGH.

In one embodiment the engine's combustion is controlled in such a way that the proportion of nitrogen oxides generated during the combustion increases stepwise or gradually/continuously all the way from time T0 to reach at time T2 the relatively high content NOₓHIGH.

The content of nitrogen oxides in the exhaust flow discharged from the post-treatment system must not reach too high levels. If for example the NO₂ content of the exhaust flow emitted amounts to or exceeds levels of the order of 300-500 ppm, nitrogen dioxide NO₂ released will generate a yellowish brown-red smoke which not only looks repulsive but also adversely affects the environment by forming undesirable compounds by reactions with the surroundings. There may also be statutory emission levels not to be exceeded. According to the present invention, remedial measures are therefore taken to regulate the discharge of nitrogen oxides NOₓ even during crystal reduction. The engine's combustion may for example be controlled in such a way that the proportion of nitrogen oxides NOₓ generated during the combustion decreases, as illustrated in Figure 6 at time T3. As mentioned above in relation to step 402, the engine may be set to deliver during reduction of the crystal build-up high contents of nitrogen oxides in order to accelerate the reduction.

At step 405, one remedial measure may thus be to reduce the nitrogen oxide content delivered by the engine H₁ to a level at which the content determined by the NOx sensor 308 is not greater than said second content H₂. The reduction may for example be achieved by continuous regulation to provide continual assurance that desired levels delivered from the vehicle 100 are not exceeded. In one embodiment the engine's combustion may be controlled in such a way that the proportion of nitrogen oxides NOₓ generated during the combustion decreases stepwise, as illustrated in Figure 6 at times T3, T3', T3'' and T3'''. In one embodiment the engine's combustion may be controlled in such a way that the proportion of nitrogen oxides NOₓ generated during the combustion decreases substantially continuously or at least in any desired small steps.

In one embodiment, the engine's combustion may be controlled in such a way that the proportion of nitrogen oxides NOₓ generated during the combustion at time T3 decreases substantially immediately, in one step, to a relatively high content NOₓLOW.

Said relatively low content NOₓLOW may be less than 400 ppm. It may be within the range 100-300 ppm. It may be less than 300 ppm. It may be less than 100 ppm. It may depend on current legal requirements regarding emissions and may be determined/specified at least partly on the basis of said legal requirements.

Alternatively, or in combination, additive may be supplied to an extent such that the combined reduction of nitrogen oxides by crystal burning and supply of additive results in said second content H₂ not being exceeded.

In one embodiment, the engine is caused to deliver a high NOₓ level NOₓHIGH, i.e. 1000-2000 ppm or a suitable content over 2000 ppm, in which case the dosing of additive is then controlled so that the NOₓ content delivered downstream of the SCR catalyst 201 is below said second content. The supply required may at least initially be very limited, since NOₓ reduction will largely be effected by the crystal build-up.

The method then moves on to step 406 to determine whether the reduction in the crystal build-up has taken place to the desired extent and can therefore be halted. So long as such is not the case, the method goes back to step 403 for fresh determination of said first content H₁. If the reduction has been completed, the method ends at step 407.

Whether the reduction of the coating has taken place to a sufficient extent may be determined in any suitable way. The reduction may for example be regarded as completed when it has proceeded for a first amount of time during which the temperature in the post-treatment system is at some suitable value. Said first amount of time may for example be a function of said temperature specified.

To ensure that the crystals have been reduced to a desired extent, the amount of additive injected may alternatively be compared with NOₓ conversion measured. In this determination, the NOₓ sensor 308 may be used in conjunction with a content H₃ determined from a second NOₓ sensor 210 situated upstream of the SCR catalyst 201. So long as the sensor values indicate that a higher NOₓ conversion has been achieved than the amount of additive supplied can achieve, at least part of the crystal build-up remains.

In one embodiment the NOₓ content delivered by the engine is lowered while at the same time the dosing of additive is halted, whereupon signals from respective NOₓ sensors before and after the SCR catalyst 201 are compared to see whether they show equal values. Both of these solutions require NOₓ sensors both upstream and downstream of the SCR catalyst. The sensor situated upstream of the catalyst may alternatively be replaced by a model of the NOₓ contents generated by the engine at different operating points in order to determine said content H₃.

The present invention is exemplified above in relation to vehicles. The invention is nevertheless also applicable to any other means of transport/processes in which particle filter systems as above are applicable, e.g. watercraft or aircraft with combustion processes as above.

Further embodiments of the method and the system according to the invention are referred to in the attached claims. It should also be noted that the system may be modified according to different embodiments of the method according to the invention (and vice versa) and that the present invention is in no way restricted to the embodiments described above of the method according to the invention, but relates to and comprises all embodiments within the protective scope of the attached independent claims.

## Claims

1. A method for reduction of a first coating in a post-treatment system (200), which system (200) is intended to treat an exhaust flow arising from combustion in a combustion engine (101), said first coating being formed by an additive supplied to said post-treatment system (200) by being supplied to a first catalyst (201) for reduction of at least one first compound (NOₓ) in said exhaust flow, said first compound being a nitrogen oxide (NOₓ), where the method, at commencement of reduction of said first coating, comprises
- raising a temperature in said post-treatment system,
- halting said supply of additive,
**characterised by**
- controlling to a relatively high level (NOₓ_HIGH) a content of said first compound (NOₓ) delivered by said engine (101), said relatively high level (NOₓ_HIGH) being 1000 ppm or higher, and, during the reduction of said first coating,
- determining a first content (H₁) of said first compound (NOₓ) at a location downstream of said first catalyst (201), and
- taking a first remedial measure to reduce the content of said first compound (NOₓ) downstream of said first catalyst (201) when said first content (H₁) is greater than a second content (H₂), where said first remedial measure comprises at least one of controlling a content of said first compound (NOₓ) delivered by said engine (101) and supplying additive so that said first content (H₁) is below said second content (H₂).

2. A method according to claim 1, in which said coating is formed at least partly upstream of said first catalyst (201).

3. A method according to claim 1 or 2, in which said first coating is a crystal build-up formed by said additive supplied to said exhaust flow.

4. A method according to any one of the foregoing claims, further comprising
- determining a third content (H₃) of said first compound (NOₓ) at a location upstream of said first catalyst (201), and
- determining on the basis of said first and second contents whether said reduction of said coating has taken place to a first extent.

5. A method according to any one of the foregoing claims, further comprising
- comparing said first content (H₁) with a supply of additive, and
- determining on the basis of said comparison whether said reduction of said coating has taken place to a first extent.

6. A method according to any one of the foregoing claims, further comprising halting said reduction of said first coating when either of the following conditions is fulfilled:
- when said first coating has been reduced to a first extent,
- when a first amount of time has passed since the reduction of the coating begun.

7. A method according to any one of the foregoing claims, which, before said determination of said first content (H₁) of said first compound (NOₓ), further comprises
- estimating a magnitude of said first coating formed, and
- commencing said reduction of said first coating when the magnitude of said estimated coating is greater than a first value.

8. A method according to claim 7, further comprising conducting said estimation on the basis of at least one representation of a temperature of said post-treatment system.

9. A method according to any one of the foregoing claims, in which said coating is urea or a combination from/with which urea may be formed.

10. A computer program which comprises program code and which when said program code is executed in a computer causes said computer to apply the method according to any one of claims 1-9.

11. A computer program product comprising a computer-readable medium which contains a computer program according to claim 10.

12. A system for reduction of a first coating in a post-treatment system (200), which post-treatment system is intended to treat an exhaust flow arising from combustion in a combustion engine (101), said first coating being formed by an additive supplied to said post-treatment system (200) by being supplied to a first catalyst (201) for reduction of at least one first compound (NOₓ) in said exhaust flow, said first compound being a nitrogen oxide (NOₓ), where the system, at commencement of reduction of said first coating, comprises means
- for raising a temperature in said post-treatment system,
- for halting said supply of additive,
**characterised in that** the system comprises means
- for controlling to a relatively high level (NOₓ_HIGH) a content of said first compound (NOₓ) delivered by said engine (101), said relatively high level (NOₓ_HIGH) being 1000 ppm or higher,
- for determining a first content (H₁) of said first compound (NOₓ) at a location downstream of said first catalyst (201), and
- for taking a first remedial measure to reduce the content of said first compound (NOₓ) downstream of said first catalyst (201) when said first content (H₁) is greater than a second content (H₂), where said first remedial measure comprises at least one of controlling a content of said first compound (NOₓ) delivered by said engine (101) and supplying additive so that said first content (H₁) is below said second content (H₂).

13. A vehicle (100) **characterised by** being provided with a system according to claim 12.

## Patentansprüche

1. Verfahren zur Reduzierung eines ersten Belags in einem Nachbehandlungssystem (200), wobei das System (200) dazu vorgesehen ist, einen aus einer Verbrennung in einem Verbrennungsmotor (101) stammenden Abgasstrom zu behandeln, wobei der erste Belag durch ein dem Nachbehandlungssystem (200) zugeführtes Additiv gebildet wird durch Zuführen zu einem ersten Katalysator (201) zur Reduktion wenigstens einer ersten Verbindung (NOₓ) in dem Abgasstrom, wobei die erste Verbindung ein Stickoxid (NOₓ) ist, wobei das Verfahren zu Beginn einer Reduzierung des ersten Belags umfasst
- Erhöhen einer Temperatur in dem Nachbehandlungssystem,
- Stoppen der Additivzufuhr,
**gekennzeichnet durch**
- Steuern eines Gehalts der von dem Motor (101) gelieferten ersten Verbindung (NOₓ) auf ein relativ hohes Niveau (NOₓ_HIGH), wobei das relativ hohe Niveau (NOₓ_HIGH) 1000 ppm oder mehr beträgt, und, während der Reduzierung des ersten Belags,
- Ermitteln eines ersten Gehalts (H₁) der ersten Verbindung (NOₓ) an einer Stelle stromabwärts des ersten Katalysators (201), und
- Ergreifen einer ersten Abhilfemaßnahme zum Verringern des Gehalts der ersten Verbindung (NOₓ) stromabwärts des ersten Katalysators (201), wenn der erste Gehalt (H₁) größer ist als ein zweiter Gehalt (H₂), wobei die erste Abhilfemaßnahme zumindest eines umfasst aus einem Steuern eines Gehalts der von dem Motor (101) gelieferten ersten Verbindung (NOₓ) und einem Zuführen von Additiv, so dass der erste Gehalt (H₁) sich unter dem zweiten Gehalt (H₂) befindet.

2. Verfahren nach Anspruch 1, bei dem der Belag zumindest teilweise stromaufwärts des ersten Katalysators (201) gebildet wird.

3. Verfahren nach Anspruch 1 oder 2, bei dem der erste Belag eine durch das dem Abgasstrom zugeführte Additiv gebildete Kristallansammlung ist.

4. Verfahren nach einem der vorhergehenden Ansprüche, ferner umfassend
- Ermitteln eines dritten Gehalts (H₃) der ersten Verbindung (NOₓ) an einer Stelle stromaufwärts des ersten Katalysators (201), und
- Feststellen, auf der Basis der ersten und zweiten Gehalte, ob die Reduzierung des Belags in einem ersten Ausmaß stattgefunden hat.

5. Verfahren nach einem der vorhergehenden Ansprüche, ferner umfassend
- Vergleichen des ersten Gehalts (H₁) mit einer Additivzufuhr, und
- Feststellen, basierend auf dem Vergleich, ob die Reduzierung des Belags in einem ersten Ausmaß stattgefunden hat.

6. Verfahren nach einem der vorhergehenden Ansprüche, ferner umfassend ein Anhalten der Reduzierung des ersten Belags, wenn eine der folgenden Bedingungen erfüllt ist:
- wenn der erste Belag in einem ersten Ausmaß reduziert worden ist,
- wenn eine erste Zeitdauer vergangen ist, seit die Reduzierung des Belags begonnen hat.

7. Verfahren nach einem der vorhergehenden Ansprüche, das vor der Ermittlung des ersten Gehalts (H₁) der ersten Verbindung (NOₓ) ferner umfasst
- Abschätzen einer Größe des gebildeten ersten Belags, und
- Beginnen der Reduzierung des ersten Belags, wenn die Größe des abgeschätzten Belags größer ist als ein erster Wert.

8. Verfahren nach Anspruch 7, ferner umfassend ein Durchführen der Abschätzung auf der Basis zumindest einer Repräsentation einer Temperatur des Nachbehandlungssystems.

9. Verfahren nach einem der vorhergehenden Ansprüche, bei dem der Belag Harnstoff oder eine Verbindung ist, aus/mit der Harnstoff gebildet werden kann.

10. Computerprogramm, das Programmcode enthält und das, wenn der Programmcode auf einem Computer ausgeführt wird, den Computer dazu veranlasst, das Verfahren nach einem der Ansprüche 1 bis 9 anzuwenden.

11. Computerprogrammprodukt umfassend ein computerlesbares Medium, welches ein Computerprogramm nach Anspruch 10 enthält.

12. System zur Reduzierung eines ersten Belags in einem Nachbehandlungssystem (200), wobei das Nachbehandlungssystem dazu vorgesehen ist, einen aus einer Verbrennung in einem Verbrennungsmotor (101) stammenden Abgasstrom zu behandeln, wobei der erste Belag durch ein dem Nachbehandlungssystem (200) zugeführtes Additiv gebildet wird durch Zuführen zu einem ersten Katalysator (201) zur Reduktion wenigstens einer ersten Verbindung (NOₓ) in dem Abgasstrom, wobei die erste Verbindung ein Stickoxid (NOₓ) ist, wobei das System, zu Beginn einer Reduzierung des ersten Belags, Mittel umfasst
- zum Erhöhen einer Temperatur in dem Nachbehandlungssystem,
- zum Stoppen der Additivzufuhr,
**dadurch gekennzeichnet, dass** das System Mittel umfasst
- zum Steuern eines Gehalts der von dem Motor (101) gelieferten ersten Verbindung (NOₓ) auf ein relativ hohes Niveau (NOₓ_HIGH), wobei das relativ hohe Niveau (NOₓ_HIGH) 1000 ppm oder mehr beträgt,
- zum Ermitteln eines ersten Gehalts (H₁) der ersten Verbindung (NOₓ) an einer Stelle stromabwärts des ersten Katalysators (201), und
- zum Ergreifen einer ersten Abhilfemaßnahme zum Verringern des Gehalts der ersten Verbindung (NOₓ) stromabwärts des ersten Katalysators (201), wenn der erste Gehalt (H₁) größer ist als ein zweiter Gehalt (H₂), wobei die erste Abhilfemaßnahme zumindest eines umfasst aus einem Steuern eines Gehalts der von dem Motor (101) gelieferten ersten Verbindung (NOₓ) und einem Zuführen von Additiv, sodass der erste Gehalt (H₁) unterhalb des zweiten Gehalts (H₂) ist.

13. Fahrzeug (100), **dadurch gekennzeichnet, dass** es mit einem System nach Anspruch 12 ausgerüstet ist.

## Revendications

1. Procédé de réduction d'un premier revêtement dans un système de post-traitement (200), lequel système (200) est destiné à traiter un flux d'échappement résultant de la combustion dans un moteur à combustion (101), ledit premier revêtement étant formé par un additif fourni audit système de post-traitement (200) en étant fourni à un premier catalyseur (201) pour une réduction d'au moins un premier composé (NOₓ) dans ledit flux d'échappement, ledit premier composé étant un oxyde d'azote (NOₓ), où le procédé, au début de la réduction dudit premier revêtement, comprend
- l'élévation d'une température dans ledit système post-traitement,
- l'arrêt de ladite fourniture d'additif,
**caractérisé en ce que**
- le contrôle à un niveau relativement élevé (NOₓ_HIGH) d'un contenu dudit premier composé (NOₓ) délivré par ledit moteur (101), ledit niveau relativement élevé (NOₓ_HIGH) étant supérieur ou égal à 1000 ppm et, durant la réduction dudit premier revêtement,
- la détermination d'un premier contenu (H₁) dudit premier composé (NOₓ) à un emplacement en aval dudit premier catalyseur (201), et
- la prise d'une première mesure corrective pour réduire le contenu dudit premier composé (NOₓ) en aval dudit premier catalyseur (201) lorsque ledit premier contenu (H₁) est supérieur à un deuxième contenu (H₁), où ladite première mesure corrective comprend au moins un du contrôle d'un contenu dudit premier composé (NOₓ) délivré par ledit moteur (101) et de la fourniture d'additifs de sorte que ledit premier contenu (H₁) est en dessous du deuxième contenu (H₂) .

2. Procédé selon la revendication 1, dans lequel ledit revêtement est formé au moins partiellement en amont dudit premier catalyseur (201) .

3. Procédé selon la revendication 1 ou 2, dans lequel ledit premier revêtement est une accumulation de cristaux formée par ledit additif fourni audit flux d'échappement.

4. Procédé selon l'une quelconque des revendications précédentes, comprenant en outre
- la détermination d'un troisième contenu (H₃) dudit premier composé (N0ₓ) à un emplacement en amont dudit premier catalyseur (201), et
- la détermination sur base desdits premier et deuxième contenu de si ladite réduction dudit revêtement a eu lieu dans une première mesure.

5. Procédé selon l'une quelconque des revendications précédentes, comprenant en outre
- la comparaison dudit premier contenu (H₁) avec une fourniture d'additif, et
- la détermination sur la base de ladite comparaison de si ladite réduction dudit revêtement a eu lieu dans une première mesure.

6. Procédé selon l'une quelconque des revendications précédentes, comprenant en outre l'arrêt de ladite réduction dudit premier revêtement lorsque l'une des conditions suivantes est remplie :
- lorsque ledit premier revêtement a été réduit dans une première mesure,
- lorsqu'une première durée de temps est écoulée depuis que la réduction du revêtement a commencé.

7. Procédé selon l'une quelconque des revendications précédentes, qui, avant ladite détermination dudit premier contenu (H₁) dudit premier composé (NOₓ), comprend en outre
- l'estimation d'une magnitude dudit premier revêtement formé, et
- le début de ladite réduction dudit premier revêtement lorsque l'ampleur dudit revêtement estimé est supérieure à une première valeur.

8. Procédé selon la revendication 7, comprenant en outre la réalisation de ladite estimation sur base d'au moins une représentation d'une température dudit système post-traitement.

9. Procédé selon l'une quelconque des revendications précédentes, dans lequel ledit revêtement est de l'urée ou une combinaison de/ avec laquelle l'urée peut être formée.

10. Programme informatique qui comprend un code de programme et qui, lorsque ledit code de programme est exécuté dans un ordinateur, amène ledit ordinateur à mettre en œuvre le procédé selon l'une quelconque des revendications 1-9.

11. Produit de programme informatique comprenant un support lisible par ordinateur qui contient un programme informatique selon la revendication 10.

12. Système pour la réduction d'un premier revêtement dans un système de post-traitement (200), lequel système est destiné à traiter un flux d'échappement résultant de la combustion dans un moteur à combustion (101), ledit premier revêtement étant formé par un additif fourni audit système de post-traitement (200) en étant fourni à un premier catalyseur (201) pour une réduction d'au moins un premier composé (NOₓ) dans ledit flux d'échappement, ledit premier composé étant un oxyde d'azote (NOₓ), où le système, au début de la réduction dudit premier revêtement, comprend un moyen
- pour l'élévation d'une température dans ledit système post-traitement,
- pour l'arrêt de ladite fourniture d'additif,
**caractérisé en ce que** le système comprend un moyen
- pour le contrôle à un niveau relativement élevé (NOₓ_HIGH) d'un contenu dudit premier composé (NOₓ) délivré par ledit moteur (101), ledit niveau relativement élevé (NOₓ_HIGH) étant supérieur ou égal à 1000 ppm,
- pour la détermination d'un premier contenu (H₁) dudit premier composé (NOₓ) à un emplacement en aval dudit premier catalyseur (201), et
- pour la prise d'une première mesure corrective pour réduire le contenu dudit premier composé (NOₓ) en aval dudit premier catalyseur (201) lorsque ledit premier contenu (H₁) est supérieur à un deuxième contenu (H₂), où ladite première mesure corrective comprend au moins un du contrôle d'un contenu dudit premier composé (NOₓ) délivré par ledit moteur (101) et de la fourniture d'additifs de sorte que ledit premier contenu (H₁) est en dessous du deuxième contenu (H₂) .

13. Véhicule (100) **caractérisé en ce qu'**il est fourni avec un système selon la revendication 12.
